# EUROPÄISCHE PATENTSCHRIFT

(11) **EP 0 939 683 B1**
(45) Veröffentlichungstag und Bekanntmachung des Hinweises auf die Patenterteilung: **16.07.2003**
(21) Anmeldenummer: 97950176.4
(22) Anmeldetag: 11.11.1997
(51) Int. Cl.: B23B 31/30, B23B 31/16, B25B 5/06

(54) **SPANNVORRICHTUNG**
CLAMPING DEVICE
DISPOSITIF DE SERRAGE

(30) Priorität: 20.11.1996 DE 19647996
(43) Veröffentlichungstag der Anmeldung: 08.09.1999
(73) Patentinhaber: HAINBUCH GMBH SPANNENDE TECHNIK, D-71672 Marbach (DE)
(72) Erfinder: WELLER, Hans-Michael, D-71672 Marbach (DE)
(74) Vertreter: Kastner, Hermann, Dipl.-Ing. Patentanwalt
(86) Internationale Anmeldenummer: EP9706287
(87) Internationale Veröffentlichungsnummer: WO98022246

(56) Entgegenhaltungen:
- DE-A- 2 019 796
- DE-A- 2 926 293
- DE-A- 3 832 582
- DE-A- 3 909 630
- FR-A- 1 191 716
- FR-A- 2 237 729
- FR-A- 2 439 060
- US-A- 3 507 507
- US-A- 3 663 027

## Beschreibung

Beim Bearbeiten von Werkstücken unterschiedlicher Art müssen diese ortsfest in einer bestimmten Position festgehalten werden oder sie müssen an einem beweglichen oder unbeweglichen Maschinenteil einer Bearbeitungsmaschine eingespannt werden. In beiden Fällen muß die dafür verwendete Spannvorrichtung das Werkstück nicht nur positionieren sondern auch die von einem Bearbeitungsvorgang herrührenden Kräfte aufnehmen und übertragen. Dabei darf das Werkstück weder durch die Spannkräfte noch duch die Bearbeitungskräfte in seiner Form verändert werden. Das gilt vor allem für dünnwandige Werkstücke. Diese Kräfte werden meist durch Reibschluß aufgenommen.

Für das Einspannen von runden Werkstücken an einer Bearbeitungsmaschine werden häufig Klemmhülsen eingesetzt. Die Klemmhülsen sind verhältnismäßig dünnwandig ausgebildet. Die eine Seite der Klemmhülse dient als Anlagefläche am Werkstück, und zwar entweder an einer Außenfläche des Werkstückes oder an einer Innenfläche eines hohlen Werkstückes. Auf der anderen Seite ist ein verhältnismäßig enger Ringraum zwischen der Klemmhülse und dem ihr benachbarten Maschinenteil vorhanden, indem die Klemmhülse angebracht ist. Dieser Ringraum ist in beiden Axialrichtungen abgedichtet. Wenn ein hydraulisches oder pneumatisches Arbeitsmittel in diesem Ringraum unter Druck gesetzt wird, verformt sich die Klemmhülse elastisch in Richtung auf das Werkstück hin und klemmt dieses fest. Dadurch, daß die Klemmhülse ihrerseits mit dem sie aufnehmenden Maschinenteil durch Formschluß oder Reibschluß verbunden ist, können die am Werkstück angreifenden Bearbeitungskräfte auf das Maschinenteil übertragen werden oder umgekehrt vom Maschinenteil auf das Werkstück.

Die Klemmhülsen haben den Nachteil, daß ihre radiale Verformbarkeit nur sehr gering ist und diese sich außerdem vom mittleren Längenabschnitt aus zu den beiden Endabschnitten hin weiter verringert. Mit Klemmhülsen können daher nur Werkstücke geklemmt werden, die in einem sehr engen Durchmesserbereich liegen. Das hat zur Folge, daß Werkstücke, die im Klemmbereich unbearbeitet sind, oft nicht mittels Klemmhülsen festgeklemmt werden können.

Die für das Einspannen von Werkstücken mit ausreichend großer Formfestigkeit verwendeten Backenfutter mit meist drei Spannbacken lassen sich bei Werkstücken mit geringer Formfestigkeit, insbesondere bei dünnwandigen Werkstücken, nicht verwenden. Die daneben vielfach verwendeten Spannzangen können Werkstücke mit größeren Durchmessertoleranzen oder Formabweichungen, z.B. Unrundheit, nicht zuverlässig spannen. Außerdem ist auch bei ihnen die radiale Spannkraft auf wenige Umfangsstellen verteilt, insbesondere dann, wenn der Ist-Durchmesser des Werkstückes nicht genau mit dem Nenn-Durchmesser der Spannzange übereinstimmt. Dünnwandige Werkstücke unterliegen dann einer erhöhten Verformungsgefahr.

Aus der FR-A-2 439 060 ist eine Spannvorrichtung gemäß dem Oberbegriff des unabhängigen Anspruchs 1 bekannt, die wenigstens einen einstückig in sich geschlossenen Spannring aus einem Elastomer aufweist, der einmal für die Außenspannung und einmal für die Innenspannung ausgebildet ist. Die auf der Innenseite oder auf der Außenseite des Spannringes gelegene Umfangsfläche bildet die Spannfläche für die Außenklemmung bzw. für die Innenklemmung eines Werkstückes. Die Spannfläche hat einen Aufriß, der zumindest annähernd eine Äquidistante der Umrißlinie des zu spannenden Werkstückes ist. Für den Spannring ist eine Haltevorrichtung vorhanden, die eine auf den Spannring abgestimmte umlaufende Ausnehmung aufweist, die bei der Außenklemmung auf der Innenseite eines hohlen Teils und bei der Innenklemmung auf der Außenseite eines innen gelegenen Teils der Haltevorrichtung angeordnet ist. An der Haltevorrichtung mündet auf der von der Spennfläche des Spannringes abgekehrten Seite an einer zwischen den Stirnwänden der Ausnehmung gelegenen Stelle eine Verbindungsleitung für ein hydraulisches oder pneumatisches Arbeitsmittel. Die Verbindungsleitung ist mit einer Druckquelle für das Arbeitsmittel verbindbar.

Der Erfindung liegt die Aufgabe zugrunde, eine Spannvorrichtung zu schaffen, mit der Werkstücke auch mit größeren Durchmessertoleranzen und/oder Formfehlern sicher eingespannt werden können und mit der auch Werkstücke mit geringer Formfestigkeit, insbesondere dünnwandige Werkstücke, zumindest verformungsarm eingespannt und auch bearbeitet werden können. Diese Aufgabe wird durch eine Spannvorrichtung mit den im Anspruch 1 angegebenen Merkmalen gelöst.

Dadurch, daß bei der Spannvorrichtung die Spannkörper mit höherer Festigkeit an der Spannfläche des Spannringes aus einem Elastomer eingebettet sind, und dadurch, daß der Spannring einen U-förmigen Querschnitt hat und er in einer auf ihn abgestimmten umlaufenden Ausnehmung der Spannvorrichtung angeordnet ist, werden die Spannkörper beim Beaufschlagen des Innenraumes des U-Profils mit einem hydraulischen oder pneumatischen Arbeitsmittel gegen das Werkstück gedrückt, das damit radial festgeklemmt wird. Dabei werden die Stirnwände des Spannringes gegen die ihnen jeweils benachbarte Seitenwand der Ausnehmung der Spannvorrichtung gedrückt. Dadurch wird einerseits der Innenraum des Spannringes nach außen hin gut abgedichtet und andererseits ein guter Reibschluß zwischen den Stirnwänden des Spannringes und der Spannvorrichtung erreicht, der den Spannring selbst in der Spannvorrichtung festklemmt. Dadurch wird letztlich das Werkstück an dem Maschinenteil radial eingespannt, an dem die Spannvorrichtung befestigt ist. Durch die hohe Elastizität des Spannringes können dabei verhältnismäßig große Durchmessertoleranzen und auch sonstige Formabweichungen des Werkstückes, wie z.B. Unrundheit, sehr gut überbrückt werden.

Dadurch, daß der Spannring in der Haltevorrichtung bei drucklosem Arbeitsmittel oder bei geringem Drücken des Arbeitsmittels in gewissen Grenzen verschiebbar ist und auch nach Erhöhung des Druckes des Arbeitsmittels aufgrund der Elastizität des Werkstoffes des Spannrings noch verformbar ist, kann das Werkstück innerhalb dieser Grenzen auf die gewünschte radiale Sollstellung eingestellt werden. Das ermöglicht es beispielsweise, ein Werkstück auch dann zwischen zwei Spitzen aufzunehmen und das bei einer spannabhebenden Bearbeitung auftretende Drehmoment mittels der Spannvorrichtung aufzunehmen oder umgekehrt auf das Werkstück zu übertragen, wenn an der Spannstelle des Werkstückes größere Durchmessertoleranzenzen und/oder größere Abweichungen von der Kreiszylinderform vorhanden sind, oder eine nichtkonzentrische Spannfläche vorliegt.

Dadurch, daß am Umfang des elastischen Spannrings eine größere Anzahl Spannkörper mit höherer Festigkeit in Umfangsrichtung verteilt angeordnet sind, sind die untereinander gleichen radialen Spannkräfte auf entsprechend viele Umfangsstellen verteilt, so da die radiale Spannkraft des einzelnen Spannkörpers verhältnismäßig klein gehalten werden kann und dennoch eine hohe Gesamtspannkraft erreicht wird. Aufgrund der Elastizität des Spannringes kann sich jeder Spannkörper in einem verhältnismäßig großen Maß auf die in seinem Umfangsabschnitt vorliegende Abweichung der Werkstückoberfläche von der Idealfläche einstellen, ohne daß die von ihm ausgeübte Spannkraft sich ändert.

Dadurch, daß eine Klemmvorrichtung vorhanden ist, mittels der nach dem radialen Einspannen des Werkstückes durch die Spannkörper diese selbst axial festgeklemmt werden können, wird die Einspannung des Werkstückes fixiert und damit der Einfluß der Nachgiebigkeit des Spannringes vollständig ausgeschaltet und das Werkstück praktisch vollkommen starr eingespannt. Der Spannring kann sogar von der radialen Spannkraft entlastet werden. Im Hinblick auf die spätere starre Klemmung der Spannkörper kann ihre anfängliche radiale Einspannkraft geringer gehalten werden. Das vermindet die elastische Verformung vor allem bei dünnwandigen Werkstücken, deren Rundheit so verbessert wird. Das wird dadurch noch unterstützt, daß Klemmkörper verwendet werden, deren Abmessung in der Umfangsrichtung des Spannringes verhältnismäßig klein ist und daß dafür die Anzahl der Klemmkörper umso größer gewält wird.

Bei einer Ausgestaltung nach Anspruch 2 wird der Spannring an der Spannvorrichtung verhältnismäßig eng geführt, so daß das Werkstück durch die Spannvorrichtung innerhalb gewisser Grenzen auch positioniert wird. Bei der alternativen Ausgestaltung nach Anspruch 3 kann umgekehrt das Werkstück zusammen mit der Spannvorrichtung in einem größeren Ausmaß innerhalb der Spannvorrichtung und damit innerhalb der Bearbeitungsmaschine willkürlich eingestellt werden, so daß beispielsweise größere Formabweichungen ausgeglichen werden können, wie sie bei unbearbeiteten Teilen häufig vorkommen.

Mit einer Ausgestaltung nach Anspruch 4 können mit der Spannvorrichtung auch solche Werkstücke zuverlässig eingespannt werden, die in axialer Richtung Formabweichungen aufweisen, insbesondere Abweichungen der Spannfläche des Werkstückes von einem achsparallelen Verlauf, wie er etwa bei einer kegeligen oder einer nach innen eingebeulten oder nach außen ausgebauchten Spannfläche gegeben ist.

Bei einer Ausgestaltung nach Anspruch 5 kann bei geringer Flächenpressung eine verhältnismäßig große axiale Klemmkraft auf die Spannkörper ausgeübt werden.

Mit einer Ausgestaltung nach Anspruch 6 können handelsübliche Teile, z.B. die Rollen von Zylinderrollenlagern, verwendet werden, die von Hause aus eine hohe Genauigkeit und eine hohe Festigkeit haben.

Im folgenden wird die Erfindung anhand von in der Zeichnung dargestellter Ausführungsbeispiele näher erläutert. Es zeigen:
- Fig. 1: einen ausschnittweise dargestellten Längsschnitt einer Spannvorrichtung mit Außenklemmung zusammen mit einem Werkstück;
- Fig. 2: einen ausschnittweise dargestellten Längsschnitt einer Spannvorrichtung mit Innenklemmung zusammen mit einem Werkstück;
- Fig. 3: einen ausschnittweise dargestellten Querschnitt einer weiteren Spannvorrichtung mit Außenklemmung zusammen mit einem Werkstück beliebiger Außenform.

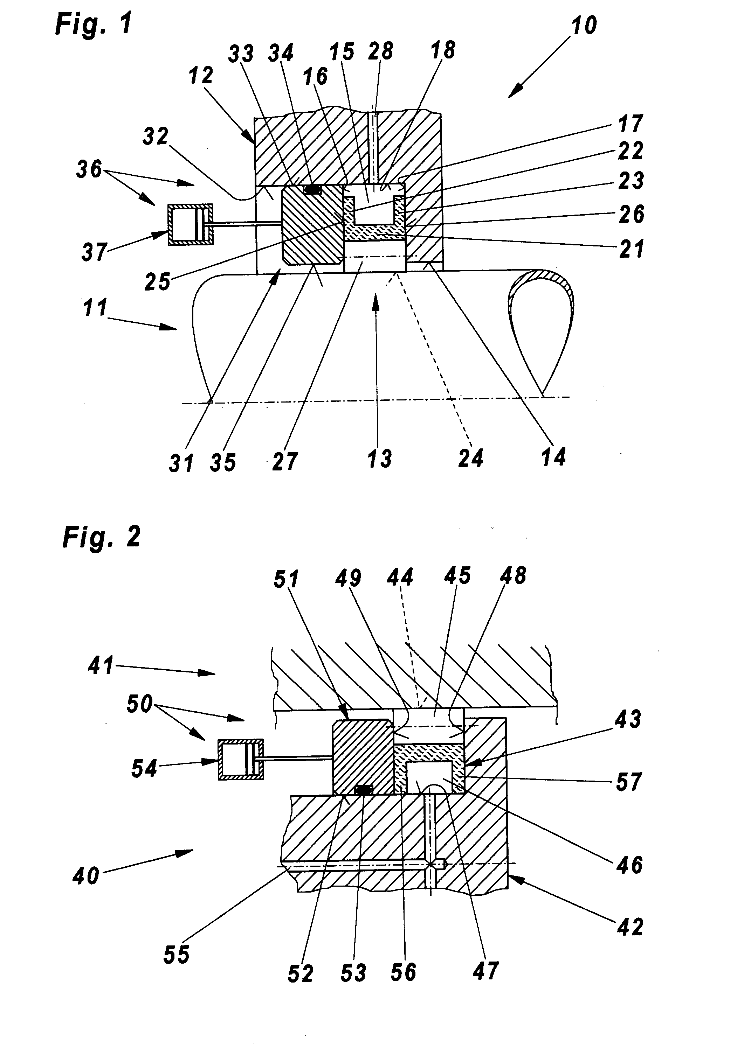

Die aus Fig. 1 ersichtliche Spannvorrichtung 10 dient dazu, ein zylindrisches Werkstück 11, z.B. in der Form eines Rohrabschnittes oder einer Welle, einer Stange oder von außen her einzuspannen, um auf das Werkstück 11 vor allem in Umfangsrichtung ein Drehmoment auszuüben, wobei zugleich auch eine axiale Spannkraft in beiden axialen Richtungen ausgeübt werden kann.

Von der Spannvorrichtung 10 ist nur eine Haltevorrichtung 12 für einen Spannring 13 dargestellt. Die Haltevorrichtung, die das Werkstück 11 ringförmig umgibt, weist außerhalb des dargestellten Bereiches entweder Befestigungselemente auf, mittels der sie ortsfest angeordnet werden kann oder sie weist Kupplungselemente auf, mittels der sie mit einem Maschinenteil einer Bearbeitungsmaschine zum Bearbeiten des Werkstückes 11 gekoppelt werden kann.

Die Haltevorrichtung 12 weist für das zylindrische Werkstück 11 eine hohlzylindrische Ausnehmung 14 auf, deren lichte Weite größer als die Außenabmessung des Werkstückes 11 ist. Auf der Innenseite weist die Haltevorrichtung 12 eine umlaufende Ausnehmung oder Nut 15 auf, die auf die Außenform des Spannrings, insbesondere auf seine Breite, abgestimmt ist. Die Seitenwände 16 und 17 der Nut 15 sind planparallel ausgebildet. Der Nutgrund 18 ist eine Zylinderfläche.

Der Spannring 13 ist entsprechend der Zylinderform des Werkstückes 11 ein in sich geschlossener Kreisring mit U-förmigem Querschnittsprofil. Das U-Profil wird durch drei aneinander anschließende Profilteile, den Stegteil 21, den Flanschteil 22 und den Flanschteil 23, gebildet. Das U-Profil ist so ausgerichtet, daß die von den Flanschteilen 22 und 23 abgekehrte Außenseite des Stegteils 21, die in Fig. 1 verdeckt ist, auf der Innenseite des Spannringes 13 gelegen ist. Sie bildet die Spannfläche 24 des Spannringes 13. Die Flanschteile 22 und 23 des U-Profils stellen zugleich scheibenförmige Flansche des Spannringes 13 dar, die vom Stegteil 21 aus radial auswärts ragen. Die beiden Stirnflächen 25 und 26 des Spannringes 13 sind planparallel ausgebildet.

Der Spannring 13 besteht aus einem Elastomer, das in einem seinen Eigenschaften entsprechenden Verfahren zum Spannring 13 geformt wird.

Am Spannring 13 sind in Umfangsrichtung entlang seiner Spannfläche 24 eine Anzahl Spannkörper 27 in den Werkstoff des Spannringes 13 eingebettet. Sie haben die gleiche axiale Erstreckung wie der Spannring 13 selbst. Sie sind, wie aus Fig. 1 ersichtlich, im einfachsten Falle als Zylinderrollen ausgebildet, wie sie beispielsweise für Wälzlager verwendet werden. Die Spannkörper 27 sind in den Spannring 13 so eingebettet, daß wenigstens diejenige Mantellinie freiliegt, d.h. nicht vom Werkstoff des Spannringes 13 bedeckt ist, die in der diametral durch die Längsachse des Werkstückes 11 und durch die Längsachse der Spannkörper 27 hindurchgehende Schnittebene gelegen ist. Zweckmäßigerweise liegt über diese Mantellinie hinaus auch ein beiderseits daran anschließender Umfangsabschnitt der Spannkörper 27 frei.

In die den Spannring 13 aufnehmende Umfangsnut 15 in der Haltevorrichtung 12 mündet eine Zuführungsleitung 28 für ein hydraulisches oder pneumatisches Arbeitsmittel. Diese Zuführungsleitung 28 steht außerhalb der Haltevorrichtung 12 mit einer Druckquelle für das Arbeitsmittel in Verbindung, so daß das Arbeitsmittel in dem ringförmigen Hohlraum des Spannringes 13 unter Druck gesetzt werden kann und auch wieder vom Druck entlastet werden kann.

Der Spannring 13 ist so gestaltet, daß im entlasteten Zustand oder Ruhezustand, der Spannring 13 und seine Spannkörper 27 um ein geringes Maß von der Oberfläche des Werkstückes 11 radial auswärts zurückstehen, damit das Werkstück 11 in die Spannvorrichtung 10 eingeführt werden kann. Sobald über die Zuführleitung 28 das Arbeitsmittel in dem verbliebenen Hohlraum der Ringnut 15 unter Druck gesetzt wird, wird der Stegteil des U-Profils des Spannringes 13 zusammen mit den darin eingebetteten Spannkörpern 27 radial einwärts in Richtung auf das Werkstück 11 hin verschoben, bis die Spannkörper 27 und auch die zwischen den Spannkörpern 27 verbliebenen Abschnitte der Spannfläche 24 wenigstens zum Teil am Werkstück 11 eng anliegen. Je höher der Druck in der Ringnut 15 ist, umso höher ist die Anpreßkraft und damit auch die Spannkraft der Spannvorrichtung 10, die auf das Werkstück 11 ausgeübt wird. Dieses wird dann sowohl in Umfangsrichtung, wie auch in axialer Richtung in der Spannvorrichtung eingespannt.

Durch das unter Druck stehende Arbeitsmittel werden die Flansche 22 und 23 des Spannringes 13 auch in axialer Richtung gegen die Seitenwand 16 bzw. 17 der Haltevorrichtung 12 gedrückt. Dadurch wirken die Flansche 22 und 23 als ringförmig umlaufende Dichtlippen, die einen Austritt des Arbeitsmittels verhindern. Außerdem bewirkt diese Anpreßkraft der Flansche und zumindest des daran anschließenden Teils des Stegteils eine entsprechend große Reibungskraft zwischen dem Spannring 13 und der Haltevorrichtung 12, so daß der Spannring 13, vor allem in Umfangsrichtung, aber auch in radialer Richtung, in der Haltevorrichtung 12 festgeklemmt ist. Dadurch können von der Spannvorrichtung 10 sowohl Spann- oder Haltekräfte auf das Werkstück 11 übertragen werden wie auch umgekehrt auf das Werkstück 11 anderweitig einwirkende Kräfte von der Spannvorrichtung 10 aufgenommen und an das anschließende Maschinenteil weitergeleitet werden.

Da der Spannring 13 aus einem Elastomer hergestellt ist und eine starre mechanische Verbindung zum Halteteil 12 nicht besteht und außerdem das Arbeitsmittel an jeder Umfangsstelle des Spannringes 13 gleichermaßen wirkt, vermag der Spannring 13 das Werkstück 11 nicht zu zentrieren. Das Einstellen des Werkstückes 11 auf eine bestimmte Lage seiner Längsachse muß durch andere Mittel erreicht werden. Beim Aktivieren der Spannvorrichtung 10 zentriert sich der Spannring 13 am Werkstück 11 und hält es in seiner zentrierten Stellung fest und entlastet dabei, wenigstens zum Teil, die Zentriervorrichtung oder Führungsvorrichtung für das Werkstück 11.

An der Haltevorrichtung 12 wird die Seitenwand 16 der Ausnehmung 15 durch die ihr zugekehrte Wandfläche eines Klemmteils 31 gebildet. Das Klemmteil 31 ist an der Haltevorrichtung 12 entlang einer an den Nutgrund 18 der Ausnehmung 15 anschließenden zylindrischen Führungsflche 32 in axialer Richtung verschiebbar geführt. Seine äußere Umfangsfläche 33 liegt dabei an der Führungsfläche 32 an. Im Bereich dieser äußeren Umfangsfläche 33 ist eine Umfangsnut vorhanden, in der ein umlaufendes Dichtungselement 34 angeordnet ist, das den Innenraum der Ausnehmung 15 nach außen hin abdichtet. Die innere Umfangsfläche 35 hat eine lichte Weite, die größer als der größte Außendurchmesser des Werkstückes ist.

Das Klemmteil 31 ist Teil einer Klemmvorrichtung 36, die mit einem Kraftantrieb in Form eines doppeltwirkenden Kolbenantriebes 37 ausgerüstet ist, mittels dessen das Klemmteil 31 an der Haltevorrichtung 12 axial verschoben werden kann und gegen den Spannring 13 gedrückt werden kann. Dadurch werden die Spannkörper 27 gegen die gegenüberliegende Seitenwand 17 der Haltevorrichtung 12 gedrückt und somit sowohl in axialer Richtung wie auch in radialer Richtung und in Umfangsrichtung in der Haltevorrichtung 12 festgeklemmt, wobei sie ihrerseits das Werkstück 11 in gleicher Weise einspannen. Der Kraftantrieb 36 ist in Fig. 1 lediglich durch das Symbol eines doppeltwirkenden Kolbenantriebes angedeutet. Er kann in jeder in einem solchen Anwendungsfall üblichen Form ausgeführt sein.

Die aus Fig. 2 ersichtliche Klemmvorrichtung 40 ist für die Innenklemmung eines zumindest zum Teil hohlen Werkstückes 31 bestimmt. Dementsprechend ist ihre Haltevorrichtung 42 für den Spannring 43 stangenförmig ausgebildet.

Der Spannring 43 hat ähnlich dem Spannring 13 ebenfalls ein U-förmiges Querschnittsprofil, das hier jedoch umgekehrt ausgerichtet ist. Die in Fig. 2 verdeckte Spannfläche 44 wird durch die außen gelegene Umfangsfläche des Spannringes 43 gebildet. Entlang dieser Umfangsfläche sind Spannkörper 45 in den Spannring eingebettet. Im übrigen wird auf die Beschreibung des Spannringes 13 verwiesen, die für den Spannring 43 in gleicher oder zumindest in entsprechender Weise gilt.

An der Haltevorrichtung 42 ist eine auf den Spannring 43 abgestimmte Ausnehmung 46 vorhanden. Sie wird innen und auf der einen Stirnseite durch eine Umfangsfläche 47 bzw. eine Wandfläche 48 der Haltevorrichtung 42 begrenzt. Auf der anderen Seite wird die Ausnehmung 46 durch die ihr zugekehrte Wandfläche 49 eines Klemmteils 51 gebildet, der Teil einer Klemmvorrichtung 50 ist. Das Klemmteil 51 ist an der Haltevorrichtung 42 verschiebbar geführt. Seine innere Umfangsfläche 52 liegt dabei an der Umfangsfläche 47 der Haltevorrichtung 42 an. Am Klemmteil 51 ist an seiner inneren Umfangsfläche 52 eine umlaufende Nut vorhanden, in der ein Dichtungselement 53 angeordnet ist. In Fig. 2 ist das Klemmteil 51 mit einem durch das Symbol eines doppelt wirkenden Kolbenantriebes angedeuteten Kraftantriebes 54 gekoppelt, der ebenfalls Teil der Klemmvorrichtung 50 ist. Mittels des Kraftantriebes 54 kann das Klemmteil 51 an der Haltevorrichtung 42 in axialer Richtung verschoben werden und gegen den Spannring 43 gedrückt werden.

Die Haltevorrichtung 42 weist eine Zuführungsleitung 55 für ein hydraulisches oder pneumatisches Arbeitsmittel auf, das von einer Druckquelle bis in den Innenraum des U-Profil des Spannringes 53 hineingeleitet werden kann, um den Spannring 43 am Werkstück 41 anzudrücken und das Werkstück 41 festzuklemmen, wie es in entsprechender Weise bei der Spannvorrichtung 10 erläutert wurde.

Bei der Spannvorrichtung 40 reichen die beiden Flansche 56 und 57 des Spannringes 43 bis an die ihnen gegenüberliegende Umfangsfläche 47 der Haltevorrichtung 42 heran. Der Spannring 43 ist daher in seiner Ruhestellung in radialer Richtung an der Haltevorrichtung 42 zumindest in einem gewissen Ausmaß geführt, so daß er in einem entsprechenden Ausmaß das Werkstück 41 vorzentrieren kann. Im Hinblick auf die Elastizität des Spannringes 43 und im Hinblick darauf, daß auch bei ihm die Druckkräfte des Arbeitsmittels auf allen Seiten gleichmäßig wirken, ist auch bei der Spannvorrichtung 40 eine genaue Zentrierung des Werkstückes 41 nicht möglich. Falls die Vorzentrierung nicht erforderlich ist oder statt der Vorzentrierung sogar eine gewisse Einstellbarkeit des Spannringes 43 in radialer Richtung erwünscht ist, wird zwischen den Flanschen 56 und 57 des Spannringes 43 und der ihnen gegenüberliegenden Umfangsfläche 47 der Haltevorrichtung 42 ein entsprechend großer radialer Abstand eingehalten.

Beim Einsatz der Spannvorrichtung 40 befindet sich das Spannteil 51 zunächst in seiner Ausgangsstellung, in der der Spannring 43 in seiner Ausnehmung im Halteteil 42 noch frei bewegt werden kann. Das Arbeitsmittel für den Spannring 43 wird unter Druck gesetzt und damit der Spannring 43 zusammen mit seinen Spannkörpern 45 am Werkstück 41 angelegt und dadurch das Werkstück 41 radial eingespannt. Anschließend wird das Spannteil 51 mittels des Kraftantriebes 44 gegen den Spannring 43 gedrückt und dabei die Spannkörper 45 zwischen dem Spannteil 51 und dem ihm gegenüberliegenden Wandteil der Haltevorrichtung 42 in axialer Richtung festgeklemmt. Durch die dabei erzeugte Reibungskraft an den Stirnflächen der Spannkörper 45 werden diese auch in radialer Richtung und in Umfangsrichtung festgeklemmt. Dadurch wird der Elastomerkörper des Spannringes 43 vor allen von den Umfangskräften, aber auch von den radialen Kräften zwischen der Spannvorrichtung 40 und dem Werkstück 41 entlastet.

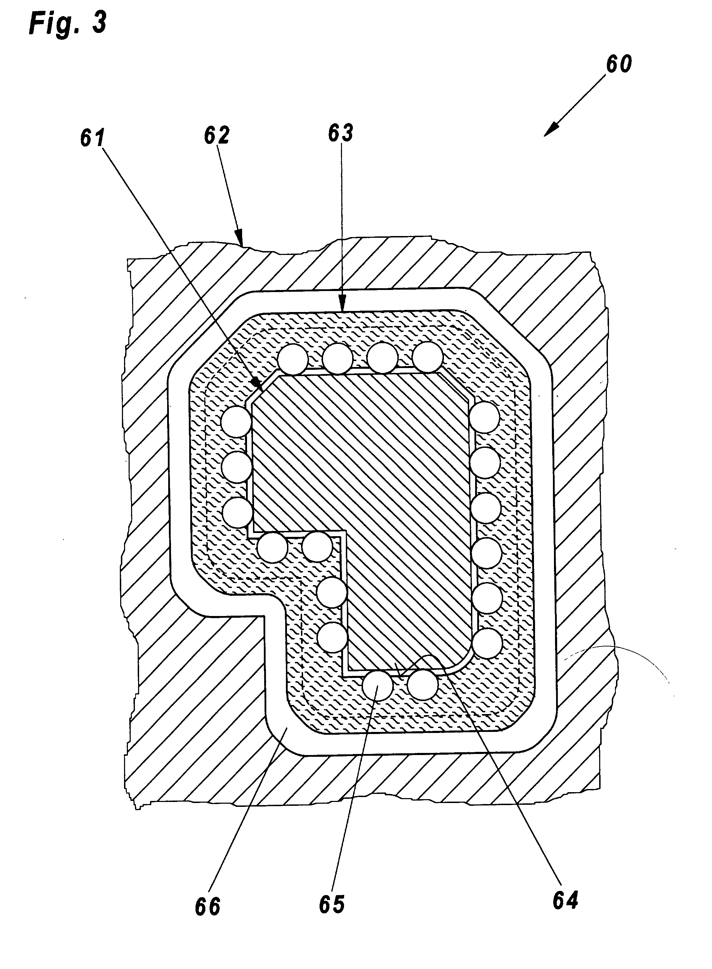

Aus Fig. 3 ist eine Spannvorrichtung 60 für die Außenklemmung eines Werkstückes 61 ersichtlich, das eine unregelmäßige Querschnittsform hat. Der in einer entsprechend geformten Haltevorrichtung 62 angeordnete Spannring 63 hat daher eine Spannfläche, deren Aufrißlinie eine Äquidistante zur Umrißlinie des Werkstückes 61 darstellt. Der besseren Verständlichkeit halber sind die Spannkörper 65 des Spannringes 63 am Werkstück 61 anliegend dargestellt, um den Spannvorgang zu verdeutlichen. In der Spannstellung wird der Elastomerkörper des Spannringes 63 zumindest teilweise näher bei dem Werkstück 61 liegen oder gar an ihm anliegen.

Der Spannring 63 sitzt in einer auf seine Abmessungen und seine Aufrißform abgestimmten Ausnehmung 66 der Haltevorrichtung 62. Diese wird zweckmäßigerweise aus mehreren Teilen zusammengesetzt, etwa um die Ausnehmung 66 leichter herstellen zu können oder ein der Aufrißform des Spannringes 63 entsprechendes Spannteil einbauen zu können und es mit hydraulischen oder pneumatischen Kolbenantrieben ausstatten zu können.

Das in Fig. 3 dargestellte Beispiel für die Außenklemmung eines Werkstückes mit unregelmäßiger Querschnittsform läßt sich sinngemäß auch auf Werstücke anwenden, die zwar eine regelmäßige Querschnittsform haben, die aber nicht kreisrund ist. Das gilt auch für die Innenklemmung von Werkstücken mit einer Umrißlinie ihrer Aufnahmefläche, die von der Kreislinie abweicht und entweder regelmäßig oder unregelmäßig ist.

### Bezugszeichenliste

- 10: Spannvorrichtung
- 11: Werkstück
- 12: Haltevorrichtung
- 13: Spannring
- 14: Ausnehmung
- 15: Ausnehmung, Nut
- 16: Seitenwand
- 17: Seitenwand
- 18: Nutgrund
- 21: Stegteil
- 22: Flanschteil, Flansch
- 23: Flanschteil, Flansch
- 24: Spannfläche
- 25: Stirnwand
- 26: Stirnwand
- 27: Spannkörper
- 28: Zuführungsleitung
- 31: Klemmteil
- 32: Führungsfläche
- 33: äußere Umfangsfläche
- 34: Dichtungselement
- 35: innere Umfangsfläche
- 36: Klemmvorrichtung
- 37: Kraft-/Kolbenantrieb

- 40: Spannvorrichtung
- 41: Werkstück
- 42: Haltevorrichtung
- 43: Spannring
- 44: Spannfläche
- 45: Spannkörper
- 46: Ausnehmung
- 47: Umfangsfläche
- 48: Wandfläche
- 49: Wandfläche
- 50: Klemmvorrichtung
- 51: Klemmteil
- 52: innere Umfangsfläche
- 53: Dichtungselement
- 54: Kraftantrieb
- 55: Zuführungsleitung
- 56: Flansch
- 57: Flansch

- 60: Spannvorrichtung
- 61: Werkstück
- 62: Haltevorrichtung
- 63: Spannring
- 64: Spannfläche
- 65: Spannkörper
- 66: Ausnehmung

## Patentansprüche

1. Spannvorrichtung mit den Merkmalen:
- es ist ein einstückig in sich geschlossener Spannring (13; 43) aus einem Elastomer vorhanden,
- die auf der Innenseite des Spannringes (13) gelegene Umfangsfläche oder die auf der Außenseite des Spannringes (43) gelegene Umfangsfläche bildet eine Spannfläche (24; 44) für die Außenklemmung eines Werkstückes (11) bzw. für die Innenklemmung eines Werkstückes (41),
- die Spannfläche (24; 44) des Spannringes (13; 43) hat einen Aufriß, der zumindest annähernd eine Äquidistante der Umrißlinie des zu spannenden Werkstückes (11; 41) ist,
- es ist eine Haltevorrichtung (12; 42) für den Spannring (13; 43) vorhanden,
- - die eine auf den Spannring (13; 43) abgestimmte umlaufende Ausnehmung (15; 46) aufweist, die bei der Außenklemmung auf der Innenseite eines zumindest teilweise hohlen Teils und bei der Innenklemmung auf der Außenseite eines innen gelegenen Teils der Haltevorrichtung (12; 42) angeordnet ist, und
- - die entweder ortsfest angeordnet ist, oder die mittels Kupplungselementen mit einem unbeweglichen oder beweglichen Maschinenteil koppelbar ist,
- an der Haltevorrichtung (12; 42) mündet auf der von der Spannfläche (24; 44) des Spannringes (13; 34) abgekehrten Seite an einer zwischen den Stirnwänden (22, 23; 56, 57) des Spannringes (13; 43) gelegenen Stelle eine Verbindungsleitung (28; 55) für ein hydraulisches oder pneumatisches Arbeitsmittel,
- die Verbindungsleitung (28; 55) ist mit einer Druckquelle für das Arbeitsmittel verbindbar,
**gekennzeichnet durch** die Merkmale:
- der Klemmring (13; 43) hat ein U-förmiges Querschnittsprofil,
- die an den Stegteil (21) des U-Profils anschließenden beiden Flanschteile (22, 23; 56; 57) bilden je eine Stirnwand des Spannringes (23; 43),
- die beiden äußeren Stirnflächen (25; 26) des Spannringes (13) sind planparallel ausgebildet,
- am Spannring (13; 43) sind eine Anzahl Spannkörper (27; 45) in Umfangsrichtung entlang der Spannfläche (24; 44) verteilt angeordnet,
- - die aus einem Werkstoff mit einer höheren Festigkeit als demjenigen des Spannringes (13; 43) hergestellt sind,
- - die am Spannring (13; 43) derart angeordnet sind, daß wenigstens die dem Werkstück (11; 41) zugekehrte Mantellinie der Spannkörper (27; 45) freiliegt, und
- - die zumindest annähernd die gleiche axiale Erstreckung wie der Spannring (13; 43) haben,
- es ist eine Klemmvorrichtung (36; 50) für das axiale Festklemmen der Spannkörper (27; 45) vorhanden,
- die Klemmvorrichtung (36; 50) weist einen ringförmig in sich geschlossenen Klemmteil (31; 51) auf,
- - der an der Haltevorrichtung (12; 42) axial verschiebbar geführt ist und
- - der die eine Seitenwand (16; 49) der Ausnehmung (15; 46) in der Haltevorrichtung (12; 42) bildet,
- zwischen der vom Werkstück (11; 41) abgekehrten Umfangsfläche (33; 52) des Klemmteils (31; 51) und der ihr gegenüberliegenden Umfangsfläche (32; 47) der Haltevorrichtung (12; 42) ist ein umlaufendes Dichtungselement (34; 53) angeordnet,
- das Klemmteil (31; 51) ist an der Haltevorrichtung (12; 42) mittels eines Kraftantriebes (36; 54) in axialer Richtung aus einer Freigabestellung in eine Klemmstellung bewegbar und umgekehrt.

2. Spannvorrichtung nach Anspruch 1 mit dem weiteren Merkmal:
- die von der Spannfläche (44) des Spannringes (43) abgekehrte Randfläche seiner Stirnwände (56; 57) liegt im Ruhezustand der Spannvorrichtung (40) an der ihnen gegenüberliegenden Wand (47) der Ausnehmung (46) in der Haltevorrichtung (42) an.

3. Spannvorrichtung nach Anspruch 1 mit dem weiteren Merkmal:
- die von der Spannfläche (24) des Spannringes (13) abgekehrte Randfläche seinr Stirnwände (22; 23) hat im Ruhezustand der Spannvorrichtung (10) einen Abstand von der ihr gegenüberliegenden Wand (18) der Ausnehmung (15) an der Haltevorrichtung (12).

4. Spannvorrichtung nach einem der Ansprüche 1 bis 3 mit dem weiteren Merkmal:
- zumindest die dem Werkstück (11) zugekehrte Mantellinie der Spannkörper (27) hat in der normal zu der ihr zugekehrten Oberfläche des Werkstückes (11) ausgerichteten Längsschnittebene den gleichen Verlauf wie die Schnittlinie der Werkstückoberfläche.

5. Spannvorrichtung nach einem der Ansprüche 1 bis 4 mit den weiteren Merkmalen:
- die beiden axialen Endflächen der Spannkörpern (27; 45) sind planparallel ausgebildet.

6. Spannvorrichtung nach Anspruch 5 mit dem weiteren Merkmal:
- die Spannkörper (27; 45) haben die Form von Zylinderrollen.

## Claims

1. A clamping device having the following features:
- a one-piece closed clamping ring (13; 43) comprising an elastomer is provided,
- the circumferential surface on the inside of the clamping ring (13) or the circumferential surface on the outside of the clamping ring (43) forms a clamping surface (24; 44) for externally clamping a workpiece (11) or for internally clamping a workpiece (41),
- the clamping surface (24; 44) of the clamping ring (13; 43) has a profile at least approximately equidistant from the contour line of the workpiece (11; 41) to be clamped,
- a holding device (12; 42) for the clamping ring (13; 43) is provided
- - which has a circumferential recess (15; 46) adapted to the clamping ring (13; 43) and provided on the inside of an at least partly hollow part in the case of external clamping and on the outside of an inner part of the holding device (12; 42) in the case of internal clamping, and
- - which is either fixedly arranged or which is connectable to an immovable or movable machine part by means of connecting members,
- in the holding device (12; 42), a connecting line (28; 55) for a hydraulic or pneumatic working medium opens on the side remote from the clamping surface (24; 44) of the clamping ring (13; 34) at a point located between the end walls (22, 23; 56, 57) of the clamping ring (13; 43),
- the connecting line (28; 55) is connectable to a pressure source for the working medium,
**characterised by** the following features:
- the clamping ring (13; 43) has a U-shaped cross-section,
- the two flange parts (22, 23; 56; 57) adjoining the crosspiece (21) of the U-section each form an end wall of the clamping ring (23; 43),
- the two outer end surfaces (25; 26) of the clamping ring (13) are formed in parallel planes,
- along the clamping surface (24; 44) of the clamping ring (13; 34) in the circumferential direction are distributed a number of clamping members (27; 45)
- - which are made of a material with greater strength than that of the clamping ring (13; 43),
- - which are arranged on the clamping ring (13; 43) in such a way that at least the generator line of the clamping members (27; 45) is exposed, the generator line facing the workpiece (11; 41), and
- - which have at least approximately the same axial extent as the clamping ring (13; 43),
- a gripping device (36; 50) for axially gripping the clamping members (27; 45) is provided,
- the gripping device (36; 50) has a closed annular gripping part (31; 51)
- - which is axially displaceably guided on the holding device (12; 42), and
- - which forms one side wall (16; 49) of the recess (15; 46) in the holding device (12; 42),
- a circumferential sealing element (34; 53) is arranged between the circumferential surface (33; 52) of the gripping part (31; 51) remote from the workpiece (11; 41) and the opposing circumferential surface (32; 47) of the holding device (12; 42),
- the gripping part (31; 51) is axially movable on the holding device (12; 42) from a release position into a gripping position and vice versa by means of a power drive (37; 54).

2. A clamping device according to claim 1, having the following additional feature:
- the boundary surface of its end walls (56; 57), which is remote from the clamping surface (44) of the clamping ring (43), rests against the opposing wall (47) of the recess (46) in the holding device (42) when the clamping device (40) is in the rest state.

3. A clamping device according to claim 1, having the following additional feature:
- the boundary surface of its end walls (22; 23), which is remote from the clamping surface (24) of the clamping ring (13), is spaced apart from the opposing wall (18) of the recess (15) in the holding device (12) when the clamping device (10) is in the rest state.

4. A clamping device according to any one of claims 1 to 3, having the following additional feature:
- at least the generator line of the clamping members (27), which generator line faces the workpiece (11), has the same path as the section line of the surface of the workpiece in the longitudinal section plane extending perpendicularly to the facing surface of the workpiece (11).

5. A clamping device according to any one of claims 1 to 4, having the following additional features:
- the two axial end surfaces of the clamping members (27; 45) are formed in parallel planes.

6. A clamping device according to claim 5, having the following additional feature:
- the clamping members (27; 45) are in the form of cylindrical rollers.

## Revendications

1. Dispositif de serrage dans lequel :
- il existe une bague de serrage (13, 43) monobloc et fermée, en élastomère,
- la surface périphérique située à l'intérieur de la bague de serrage (13) ou la surface périphérique située à l'extérieur de la bague de serrage (43) forme une portée de serrage (24, 44) pour serrer de l'extérieur une pièce (11) ou serrer de l'intérieur une pièce (41),
- la portée de serrage (24, 44) de la bague de serrage (13, 43) a un contour qui au moins approximativement est à une distance constante du contour de la pièce à serrer (11, 41),
- il existe un dispositif (12, 42) de maintien de la bague de serrage (13, 43),
* qui présente une cavité (15, 46) accordée à la bague de serrage (13, 43) et qui, dans le cas de serrage externe se trouve vers l'intérieur d'une partie creuse au moins en partie du dispositif de maintien (12) et, dans le cas de serrage interne se trouve à l'extérieur d'une partie située à l'intérieur d'elle, du dispositif de maintien (42),
* qui peut être fixé ou accouplé par des moyens d'accouplement à une partie, fixe ou mobile, d'une machine,
- dans le dispositif de maintien (12, 42) débouche sur le côté qui n'est pas en face de la portée de serrage (24, 44) de la bague de serrage (13, 43), en un point situé entre les parois frontales (22, 23 ; 56, 57) de cette bague, une conduite de liaison (28, 55) pour un fluide de travail hydraulique ou pneumatique,
- la conduite de liaison (28, 55) peut être reliée à une source de pression pour le fluide de travail,
**caractérisé en ce que**
- la bague de serrage (13, 43) a un profil transversal en forme de U,
- les deux flancs (22, 23 ; 56, 57) raccordés à la barrette (21) du profil en U forment chacun une paroi frontale de la bague de serrage (23, 43),
- les deux portées frontales externes (25, 26) de la bague de serrage (13) sont planes et parallèles,
- sur la bague de serrage (13, 43) sont montés un certain nombre de corps de serrage (27, 45) répartis périphériquement sur la portée de serrage (24, 44), étant précisé que ces corps de serrage :
* sont faits d'une matière plus résistance que celle constituant la bague de serrage (13, 43),
* sont disposés sur la bague de serrage de manière qu'au moins la génératrice de chaque corps située en face de la pièce (11, 41) est libre,
* ont à peu près la même longueur axiale que la bague de serrage (13, 43),
- il y a pour bloquer axialement les corps de serrage (27, 45) un dispositif de serrage (36, 50) comportant une pièce de serrage (31, 51) en forme de bague fermée qui :
* peut coulisser axialement sur le dispositif de maintien (12, 42),
* constitue une paroi latérale (16, 49) de la cavité (15, 46) du dispositif de maintien (12, 42),
- entre la surface périphérique (37, 52), éloignée de la pièce (11, 41) et la surface périphérique (32, 47) qui leur fait face dans le dispositif de maintien (12, 42) est monté un joint périphérique d'étanchéité (34, 53),
- la partie de serrage (31, 51) peut, dans le dispositif de maintien (12, 42) se déplacer sous l'action d'un entraîneur (36, 54), en direction axiale entre une position de libération et une position de serrage, et inversement.

2. Dispositif de serrage selon la revendication 1, présentant en plus la caractéristique suivante :
la surface marginale éloignée de la portée de serrage (44) des parois frontales (56, 57) de la bague de serrage (43) repose sur la paroi (47) qui lui fait face dans l'évidement (46) du dispositif de maintien (42), quand le dispositif de serrage (40) est au repos.

3. Dispositif de serrage selon la revendication 1, présentant en plus la caractéristique suivante :
la surface marginale, éloignée de la portée de serrage (24) des parois frontales (22, 23) de la bague de serrage (13) présente, quand le dispositif de serrage (10) est au repos, une certaine distance par rapport à la paroi (18) qui lui fait face dans l'évidement (15) du dispositif de maintien (12).

4. Dispositif de serrage selon l'une quelconque des revendications 1 à 3, présentant en plus la caractéristique suivante :
la génératrice de chaque corps de serrage (27) qui est en face de la pièce (11) se confond avec la section de la surface de la pièce par un plan longitudinal médian du corps de serrage, perpendiculaire à cette surface.

5. Dispositif de serrage selon l'une quelconque des revendications 1 à 4, présentant en plus la caractéristique suivante :
les deux surfaces situées axialement aux extrémités de chaque corps de serrage (27, 45) sont planes et parallèles.

6. Dispositif de serrage selon la revendication 5, présentant en plus la caractéristique suivante :
les corps de serrage (27, 45) ont la forme de rouleaux cylindriques.
